# EUROPEAN PATENT SPECIFICATION

(11) **EP 3 723 304 B1**
(45) Date of publication and mention of the grant of the patent: **30.08.2023**
(21) Application number: 19168366.3
(22) Date of filing: 10.04.2019
(51) Int. Cl.: H04B 11/00

(54) **ACOUSTIC COMMUNICATION AND POWERING ASSEMBLY**
AKUSTISCHE KOMMUNIKATIONS- UND SPEISUNGSANORDNUNG
ENSEMBLE D'ALIMENTATION ET DE COMMUNICATION ACOUSTIQUE

(43) Date of publication of application: 14.10.2020
(73) Proprietor: ABB Schweiz AG, 5400 Baden (CH)
(72) Inventor: Pape, Detlef, 5415 Nussbaumen (CH)
(74) Representative: Maiwald GmbH

(56) References cited:
- WO-A1-2018/044469
- US-A1- 2012 127 833
- US-A1- 2015 176 399

## Description

### Field of the invention

The present invention relates to a method for acoustic powering and communicating, an acoustic communication and powering assembly, a transducer, a sensor platform, and a method for acoustic powering and communicating.

### Background

Sensing and measuring different properties of media inside a vessel or in toxic or high voltage environments is difficult or needs specialized, expensive sensors. These vessels are often closed, so that no direct access to a sensor is possible, and a hole has to be made into the wall to get access to the sensor. Such a hole will weaken the mechanical structure and strongly increases the risk of leakages. This is especially critical for tanks in the process industry as well as for gas insulated switchgears. Further, these tanks are normally made of metal so that electromagnetic signals cannot pass through the metal and feedthroughs are not possible or not preferred due to a weakening of the system. Furthermore, no access window may be available or insulation (vacuum/high voltage) inhibits access. Thus, sending any optical or electrical signal through the tanks is not possible.

Supplying power to actuators, particularly low-power actuators, such as a shutter or a valve, inside a closed and electromagnetically sealed compartment like a vessel is difficult as well and usually requires supply cables to be brought forward to the actuator through a hole in the wall. This has the same disadvantages as described above related to sensors.

US 2015176399 A1 describes a method and arrangement for powering, controlling, and communicating with sensors at a distance uses acoustic wave energy.

WO 2018044469 A1 describes an electro-acoustic communications node for a downhole wireless telemetry system.

US 2012127833 A1 system for transmitting power and data through a solid describes a medium includes a power signal transmitter configured to acoustically transmit power through the solid medium to a power signal receiver

### Summary of the invention

Therefore, there may be a desire to transmit sensor data from inside a vessel to a device outside the vessel in an inexpensive way and without harming the structure of the vessel.

Also, there may be a desire to transmit energy to actuators, particularly low-power actuators, inside a vessel from outside the vessel in an inexpensive way and without harming the structure of the vessel.

The problem is solved by the subject-matter of the independent claims. Embodiments are provided by the dependent claims, the following description and the accompanying figures.

The described embodiments similarly pertain to the method for connecting to a sensor/actuator platform comprising electrical load circuits, the acoustic communication and powering assembly, and the transducer. Synergetic effects may arise from different combinations of the embodiments although they might not be described in detail.

A sensor/actuator platform in this context nay be a sensor platform or an actuator platform or a combined sensor+actuator platform.

Further on, it shall be noted that all embodiments of the present invention concerning a method, might be carried out with the order of the steps as described, nevertheless this does not have to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, an acoustic communication and powering assembly is provided, comprising: a transducer, configured to convert electrical energy into acoustic wave energy; an acoustic wave conductor; a sensor/actuator platform, comprising a sensor and/or an actuator, sensor/actuator platform circuits, and an acoustic wave energy converter, configured to convert acoustic wave energy into electrical power and to provide the electrical power to the sensor and/or the actuator and the sensor/actuator platform circuits; wherein the transducer and the sensor/actuator platform are connected acoustically by the acoustic wave conductor. The sensor/ actuator platform further comprises an electrical signal to acoustic wave signal converter, configured to convert electrical signals from the sensor and/or actuator into acoustic wave signals; wherein a frequency spectrum of the waves transporting the acoustic wave energy is lower than a frequency spectrum of the waves for the acoustic wave signals, the acoustic wave energy is ultrasonic energy.

For example, the acoustic communication assembly is intended for powering and communicating through an optically and electromagnetically shielding wall. Typically, such a wall or parts of such a wall are metallic. On the other hand, metal is a good conductor for acoustic waves, which can be used for transmitting power and signals acoustically instead of wired or wireless powering and communicating via electromagnetic waves or induction. The transducer generates acoustic waves carrying acoustic energy that is transduced into an acoustic wave conductor.

Examples for an application of the acoustic communication assembly are metallic process vessels, breakers, transformers, etc., where power has to be transmitted to the inside and data, e.g., measurement data, has to be transmitted to the outside. That is, inside the vessels or arrangements, there are electrical loads comprising, e.g., sensors, amplifiers, communication devices, processors and actuators, which have to be powered and which produce data to be transmitted to the outside.

According to an example, the sensor/actuator platform is a multi-sensor/actuator platform, i.e., the platform may be the basic platform for more than one sensor or actuator. Due to the dispersion characteristics of the acoustic waves in the acoustic wave conductor, the platform may receive the power and send the communication data at different locations on the platform.

On the sensor/actuator platform any kind of sensors, especially small, cheap MEMS sensors, or actuators can be mounted. No specialized components are necessary. The platform can consist of a small metal casing of a few mm diameter and thickness.

According to an embodiment, the transducer further comprises an acoustic wave signal to electrical signal converter, configured to convert acoustic wave signals into electrical signals; and the sensor/actuator platform further comprises an electrical to acoustic wave signal converter, configured to convert electrical signals from a sensor into acoustic wave signals.

The sensor/actuator platform, that may be mounted, e.g., inside of the vessel at the wall, and that is powered by ultrasonic energy from the outside, will communicate via ultrasonic signals back to the outside. Therefore, also regarding the communication no hole or other penetration of the vessel wall is necessary.

Again, according to the first aspect, the spectrum of the waves for the acoustic wave energy, i.e., for the powering of the electrical load, is lower than the spectrum of the waves used for the communication. In order to avoid interferences between the power and the communication signal, the communication signal should be at a different frequency than the frequency of the power signal. The power signal is transmitted at a low frequency in order to gain low damping and high power transfer, and the communication signal is transmitted at high frequencies to provide high signal transfer rates. Since the communication signal and the power signal use a different spectrum, they can be distinguished by the connected communication and power circuits.

According to a further embodiment, the wave signal to electrical signal converter and the acoustic wave energy converter of the sensor/actuator platform are based on a piezo element. Both converters may be based on the same piezo element. Alternatively, the two converters are based on two separate sensor or actuator elements. This allows for sending the signals from a location slightly different from the location of the element which receives the acoustic wave energy and at a different orientation.

According to an example, the platform comprises further electronics to provide the power according to the requirements of the electrical load, as for example the sensor or actuator. Further, the electronics comprises circuits to generate the communication signals. For example, the communication is performed according to a standard communication protocol. A logic, e.g., a hardware or a processor run a firmware or a software that generates data packages according to a protocol, that are provided to the electrical signal to acoustic signal converter on the platform. The data packages may be modulated onto an acoustic carrier in the ultrasonic band, e.g., at 200 kHz or 300 kHz.

According to an embodiment, the propagation direction of the electrical signal differs from the propagation direction of its reflections at the surfaces of the acoustic wave conductor; i.e., the surface of the electrical signal to acoustic wave signal converter is oriented such that reflections of the acoustic wave signal on the surfaces of the wave conductor do not superpose the acoustic wave signal at the electrical signal to acoustic wave signal converter or the transducer; and the transducer is arranged in the main radiation direction of the electrical signal to acoustic wave signal converter. For realizing this embodiment, the two converters are separated, as yet explained above. The transmitting piezo element is tilt with respect to the vessel wall and therefore the transmission direction with respect to the wall surface. Due to the tilting, the reflected signal will have a propagation component also parallel to the wall surfaces and thus the point, where the signal hits again the wall will be shifted compared to the transmitting point. Therefore, interferences between new signals and reflections are avoided.

According to an embodiment, the acoustic conductor is a vessel wall. The vessel may be a closed object, e.g., a hermetically closed object, enclosing for example a fluid, gas or vacuum, or accommodates an electrical assembly that is insulated, so that no access to the inside is possible, as for example breakers or transformers.

According to a second aspect, a transducer is provided, configured for an acoustic communication and powering assembly as described above. The transducer converts electrical power into acoustic power, wherein the transducer can be connected acoustically to a sensor/actuator platform through an acoustic wave conductor. The transducer thus transmits the acoustic power to the sensor/actuator platform, that reconverts the acoustic power into electrical power, so that electrical energy can be transferred from the input of the transducer to the sensor/actuator platform by transforming electrical energy into acoustic energy. The energy is sufficient to supply the one or more sensors or actuators and the electronics of the platform. E.g., the power magnitude may be in the range of 10 mW to 100 mW. The power magnitude may depend on the material of the wave conductor and the distance between the transducer and the piezo on the sensor and/or actuator element or other factors such as acoustic coupling, piezo material, geometry, etc....

According to a third aspect, a sensor/actuator platform is provided, configured for an acoustic communication and powering assembly as described above. The sensor/actuator platform comprises a sensor and/or an actuator and an electrical signal to acoustic wave signal converter, configured to convert electrical signals from the sensor and/or actuator into acoustic wave signals, wherein the sensor/actuator platform can be connected acoustically to a transducer by an acoustic wave conductor. The acoustic power signal to electrical power converter may be, for example, a piezo element. The electrical load on the sensor/actuator platform may comprise a plurality of sensors and/or actuators, electronics to operate the sensors and/or actuators and to process sensor signal, and a communication module to prepare the sensor data for transmission. The electronics may therefore be configured to provide the electrical power in a suitable manner to the circuits on the platform and the sensor and/or actuator, and to process the signals from, e.g., the sensors so that the signals or the data to be transmitted can be provided to the electrical signal to acoustic wave signal converter.

According to a fourth aspect, a method for connecting to a sensor/actuator platform comprising sensor and/or actuator circuits, in an electrical and optical insular environment, is provided. The method comprises the steps:
S1: converting, by a transducer, electrical energy into acoustic energy;
S2: transducing, by the transducer, the acoustic energy into an acoustic conductor;
S3: receiving, by the sensor/actuator platform, from the acoustic conductor the acoustic energy; and
S4: converting the acoustic energy into electrical energy to power the sensor and/or actuator circuits of the sensor/actuator platform.

These steps are performed continuously to ensure the power supply for the sensors and/or actuators and the communication circuits.
S5: converting, by the sensor/actuator platform, electrical signals into acoustic wave signals;
S6: transmitting, by the sensor/actuator platform, the acoustic signals over the acoustic conductor;
S7: receiving, by the transducer, from the acoustic conductor the acoustic signals; and S8: converting, by the transducer, the acoustic signals into electrical signals.

These steps presume that the steps ensuring the power supply are performed contemporarily.

According to an alternative embodiment, the steps for powering the sensor/actuator platform and for the data communication are performed alternately. In this case, the power may be stored temporarily in an energy storage as, e.g., a capacity, and the power may be used in a time interval for communication. Due to the time division access character of this alternative, the same spectrum may be used.

These and other features, aspects and advantages of the present invention will become better understood with reference to the accompanying figures and the following description.
- Fig. 1: shows a sensor communication and powering assembly according to an embodiment.
- Fig. 2: shows a sensor/actuator platform according to an embodiment.
- Fig. 3: shows the assembly with a sensor/actuator platform mounted on a wall according to an embodiment.
- Fig. 4: shows the mounting of the sensor/actuator platform with interference.
- Fig. 5: shows the mounting of the sensor/actuator platform without interference.
- Fig. 6: shows a block diagram of a method for connecting to a sensor/actuator platform according to an embodiment.

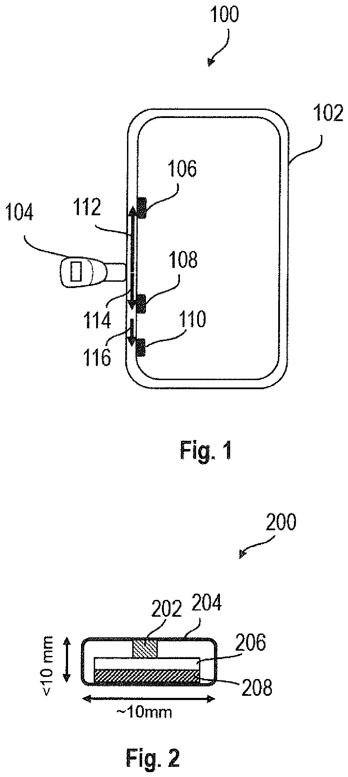

Fig. 1 shows an acoustic communication and powering assembly 100 comprising a vessel 102 consisting of a material that conducts acoustic waves, sensors 106, 108, 110, and a transducer 104. The sensors 106, 108, 110 may be inexpensive standard sensors, e.g., a PT 100 for sensing the temperature inside the vessel or a fluid, a photodiode for measuring the light intensity, or sensor for sensing pressure, partial discharge, etc. The sensors 106, 108, 110 may be mounted on a sensor/actuator platform as for example a chip-like sensor/actuator platform or may be a multiple sensor chip. The platform provides power to the sensors 106, 108, 110 and circuits, and receives and transmits signals with an acoustic wave energy converter 208 and an electrical signal to acoustic wave signal converter, respectively, such as a Piezo element. On the outside of the wall, a transducer 104 is mounted coupling acoustic energy at lower frequencies into wall of the vessel 102. The communication via the sensor/actuator platform with the sensors 106, 108, 110 is performed by using higher frequency signals. When using a piezo element, the waves are in the ultrasonic range.

Fig. 2 shows a sensor/actuator platform or sensor chip 200 setup with a casing 204, a sensing element 202, electronics 206, and a piezo element 208. The casing 204 can be made of any material: steel, glass, plastics. The whole platform is encapsulated into a tight casing to protect it from the environment and process conditions. Depending on the sensing requirements, the metallic casing 204 may be EMC (electromagnetic compatibility) sealed. The sensing element 202 may be a thermocouple, a PT100, a photodiode, an antenna, etc. The electronics 206 may be a small electronic board comprising a rectifier for power supply and an amplifier and modulator for the signal transmission. Advanced functionality can be provided by implementing a processor. As Piezo 208 a thin (some tenth of mm) piezoelectric ceramic may be chosen.

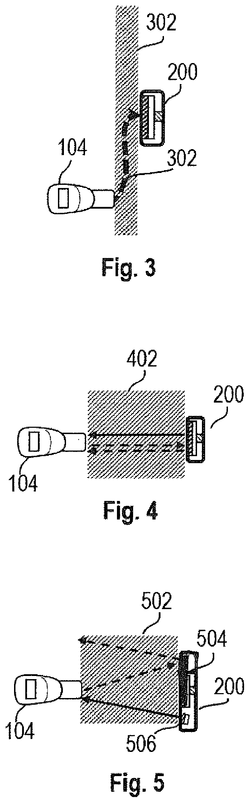

Fig. 3 shows the assembly with a sensor/actuator platform or a sensor chip 200 mounted on a wall 200, e.g., inside of a vessel, and a transducer 104, mounted on the same wall 302 outside of the vessel. The mounting of the sensor chip 200 can be performed by gluing, welding, or screwing to the wall. Arrow 302 indicates the acoustic energy flow from the transducer 104 to the sensor chip 200.

The transducer 104 excites, for example, Lamb waves that are guided inside the wall and propagate with low divergence. Lamb waves have advantageous propagation characteristics of guided waves. Additionally, they feature eminent merits like low attenuation, low energy consumption, convenience in actuation/acquisition.

Several types of transducers may be used. According to an example, the transducer may be one of an air/gas-coupled or fluid-coupled transducer, electro-magnetic acoustic transducers (EMAT), a piezo based transducer, a laser based transducer, or an interdigital transducer.

Figs. 4 and 5 show the mounting of the sensor platform 200 to avoid interferences. When an ultrasonic signal is sent from one side of the wall 402 to the other, a part of the energy is transferred to the receiver 104 but a part of the energy is reflected back towards the transmitter 200. Due to the normally parallel surfaces of the wall, this reflection will occur several times and will interfere with the newly sent signals, so that the newly sent signals cannot be read correctly anymore. So the ring-down time of these multiple times will determine the transmission rate of the communication. Additionally, the power signal can also interfere with the communication signal. Due to its very high intensity compared to the communication signal, the ring-down time is much longer for the power signal. Using different frequencies for communication and power signal avoids interferences between the power and the communication signal The power signal at a low frequency achieves a low damping and high power transfer. The communication signal at high frequencies on the other hand provides high signal transfer rates. The communication frequency is preferably not a multiple of the power signal to avoid interferences with higher harmonics of the power signal due to nonlinearities, especially in the piezo.

Fig. 5 shows another way to avoid interferences. Using separate piezos for sending signals 502 and receiving the acoustic energy 504 allows for tilting the sending piezo 506 and thus changing the transmission direction with respect to the surface of the wall 502. Due to the tilting, the reflected signal will have a propagation component also parallel to the wall surfaces and thus the point, where the signal hits again the wall 502 will be shifted compared to the transmitting point and the reflection does not hit the transducer 104, so that the original signal does not interfere with the reflected signal.

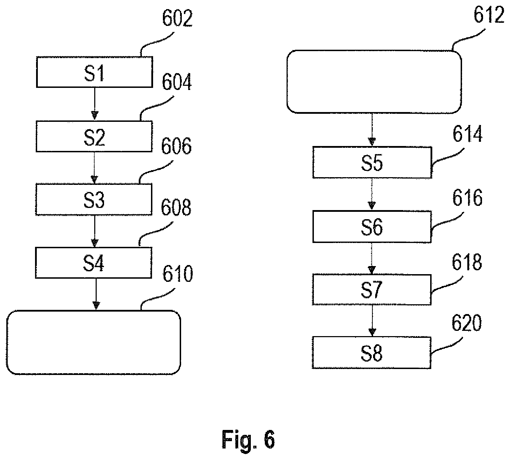

Fig. 6 shows a block diagram of a method for acoustic powering and communicating, e.g., in an electrically and optically insulating or electromagnetically shielded environment. The method comprises the following steps:
S1: Converting 602, by a transducer 104, electrical energy into acoustic energy.
S2: Transducing 604, by the transducer, the acoustic energy into an acoustic conductor. The acoustic energy may be transmitted in form of Lamb waves, that are excited by the transducer directly in the wall. The acoustic energy in the form of Lamb waves is then transported inside an acoustic conductor, as for example a metallic wall, to a receiver. Alternatively, the acoustic energy may be transmitted through a medium inside the vessel or in a closed compartment.
S3: Receiving 606, by a sensor/actuator platform, the acoustic energy from the acoustic conductor at the receiver platform.
S4: Converting 608 the acoustic energy into electrical energy to power the electrical load circuits 202, 206 of the sensor platform 200. Preferably, sensor platform 200 has a piezo element, that receives and converts the acoustic energy into electrical energy, which can then be provided to the electronics and, e.g., one or more sensors on the sensor platform 200.

Steps 602 to 608 are preferably performed continuously, so that electrical energy is permanently available at 610. Alternatively, steps 602 to 608 are performed at regular intervals. The electrical energy is brought into a form suited for the sensors, actuators and electronics on the platform 200.

For the next steps, it is presumed that electrical energy is available 612 from steps S1 to S4. If electrical energy is available 612 at the sensor platform, the following further steps of the method may be performed:
S5: Converting 614, by the sensor/actuator platform 200, electrical signals into acoustic wave signals. The electrical signal origins, e.g., from one or more sensors on the platform. The sensor signals may be amplified, filtered and digitalized if required by the electronics 206 on the sensor platform 200. The such obtained data may further be processed according to a communication protocol and provided to the piezo element 208, so that the next step can be performed:
S6: Transmitting 616, by the sensor platform 200, the acoustic signals over the acoustic conductor 102. Preferably, the acoustic waves are coupled into the acoustic conductor 102 in the direction to the transducer 104, but at an angle such that reflections at the wall 102 or the transducer 104 and the sensor platform 200 are avoided as shown in Figs. 4 and 5.

Finally, the following steps are performed:
S7: Receiving 618, by the transducer 104, the acoustic signals from the acoustic conductor.
S8: Converting 620, by the transducer 104, the acoustic signals into electrical signals. The electrical signals contain, e.g., sensor data, that may be decoded according to a communication protocol or forwarded to a server.

Therefore, a small, chip-like sensor/actuator platform, e.g., a sensor platform, is provided, that is acoustically powered from the outside of a closed vessel or in a toxic/high voltage environment without penetration of the wall. The platform is equipped with, e.g., cheap standard sensors and/or actuators. A transducer on the outside generates acoustic/electrical signals for powering of and communicating with, e.g., sensor and/or actuator chips. Measurements at many multiple locations inside the vessel are therefore possible. The system can be adapted to a very broad variety of different physical measurements, and no special development is needed for additional physical values to be measured.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. Acoustic communication and powering assembly (100), comprising:
a transducer (104), configured to convert electrical energy into acoustic wave energy;
an acoustic wave conductor (102);
a sensor/actuator platform (200), comprising a sensor and/or actuator (202), sensor/actuator platform circuits (206), and an acoustic wave energy converter (208, 504), configured to convert acoustic wave energy into electrical power and to provide the electrical power to the sensor and/or actuator (202) and the sensor/actuator platform circuits (206);
wherein
the transducer (104) and the sensor/actuator platform (200) are connected acoustically by the acoustic wave conductor (102); wherein
the sensor/actuator platform (200) further comprises an electrical signal to acoustic wave signal converter (208, 506), configured to convert electrical signals from the sensor and/or actuator into acoustic wave signals; wherein
a frequency spectrum of the waves transporting the acoustic wave energy is lower than a frequency spectrum of the waves for the acoustic wave signals, the acoustic wave energy is ultrasonic energy.

2. Acoustic communication and powering assembly (100) according to claim 1. wherein the electrical signals comprise measurement data, wherein the sensor/actuator platform circuits (206) are configured to collect measurements from the sensor and/or actuator, to generate measurement data from the measurements, and to provide the measurement data as electrical signal to the electrical signal to acoustic wave signal converter (208).

3. 4. Acoustic communication and powering assembly (100) according to any of the previous claims, wherein the propagation direction of the electrical signal differs from the propagation direction of its reflections at the surfaces of the acoustic wave conductor (102); and
wherein the transducer (104) is arranged in the main radiation direction of the electrical signal to acoustic wave signal converter (208).

4. Acoustic communication and powering assembly (100) according to one of the preceding claims, wherein the acoustic wave signal to electrical signal converter (208) and the acoustic wave energy converter (208) of the sensor platform (200) are based on a piezo element.

5. Acoustic communication and powering assembly (100) according to one of the preceding claims, wherein the acoustic conductor (102) is a vessel wall.

6. Transducer (104), configured for an acoustic communication and powering assembly (100) according to one of claims 1 to 5.

7. Sensor/actuator platform (200), configured for an acoustic communication and powering assembly (100) according to one of claims 1 to 5.

8. Method for acoustic powering and communicating, comprising the steps:
converting, by a transducer (104), electrical energy into acoustic energy; transducing, by the transducer (104), the acoustic energy into an acoustic conductor (102);
receiving, by a sensor/actuator platform (200), the acoustic energy from the acoustic conductor (102); and
converting the acoustic energy into electrical energy to power the electrical load circuits (202, 206) of the sensor/actuator platform (200);
converting, by an electrical signal to acoustic wave signal converter (208, 506) of the sensor/actuator platform (200), electrical signals from the sensor and/or actuator into acoustic wave signals;
transmitting, by the sensor/actuator platform (200), the acoustic wave signals to the transducer via the acoustic conductor (102);
receiving, by the transducer (104), the acoustic signals from the acoustic conductor (102); and
converting, by the transducer (104), the acoustic signals into electrical signals;
wherein
a frequency spectrum of the waves transporting the acoustic wave energy is lower than a frequency spectrum of the waves for the acoustic wave signals, the acoustic wave energy is ultrasonic energy.

## Patentansprüche

1. Akustische Kommunikations- und Speisungsanordnung (100), umfassend:
einen Wandler (104), der dazu ausgelegt ist, elektrische Energie in Schallwellenenergie umzuwandeln;
einen Schallwellenleiter (102);
eine Sensor/Aktor-Plattform (200), die einen Sensor und/oder Aktor (202), Sensor/Aktor-Plattformschaltungen (206) und einen Schallwellenenergieumrichter (208, 504) umfasst, der dazu ausgelegt ist, Schallwellenenergie in elektrische Energie umzuwandeln und die elektrische Energie dem Sensor und/oder Aktor (202) und den Sensor/Aktor-Plattformschaltungen (206) zuzuführen; wobei
der Wandler (104) und die Sensor/Aktor-Plattform (200) durch den Schallwellenleiter (102) akustisch verbunden sind; wobei
die Sensor/Aktor-Plattform (200) ferner einen Elektrosignale-zu-Schallwellensignale-Umrichter (208, 506) umfasst, der dazu ausgelegt ist, elektrische Signale aus dem Sensor und/oder Aktor in Schallwellensignale umzuwandeln; wobei
ein Frequenzspektrum der Wellen, die die Schallwellenenergie transportieren, niedriger als ein Frequenzspektrum der Wellen für die Schallwellensignale ist, wobei die Schallwellenenergie Ultraschallenergie ist.

2. Akustische Kommunikations- und Speisungsanordnung (100) gemäß Anspruch 1, wobei die elektrischen Signale Messdaten umfassen, wobei die Sensor/Aktor-Plattformschaltungen (206) dazu ausgelegt sind, Messungen aus dem Sensor und/oder Aktor zu sammeln, aus den Messungen Messdaten zu erzeugen und die Messdaten als elektrisches Signal an den Elektrosignale-zu-Schallwellensignale-Umrichter (208) zu liefern.

3. Akustische Kommunikations- und Speisungsanordnung (100) gemäß einem der vorhergehenden Ansprüche, wobei sich die Ausbreitungsrichtung des elektrischen Signals von der Ausbreitungsrichtung seiner Reflexionen an den Oberflächen des Schallwellenleiters (102) unterscheidet; und
wobei der Wandler (104) in der Hauptstrahlungsrichtung des Elektrosignale-zu-Schallwellensignale-Umrichters (208) angeordnet ist.

4. Akustische Kommunikations- und Speisungsanordnung (100) gemäß einem der vorhergehenden Ansprüche, wobei der Schallwellensignal-zu-Elektrosignal-Umrichter (208) und der Schallwellenenergieumrichter (208) der Sensorplattform (200) auf einem Piezoelement basieren.

5. Akustische Kommunikations- und Speisungsanordnung (100) gemäß einem der vorhergehenden Ansprüche, wobei der Schallleiter (102) eine Gefäßwand ist.

6. Wandler (104), ausgelegt für eine akustische Kommunikations- und Speisungsanordnung (100) gemäß einem der Ansprüche 1 bis 5.

7. Sensor-/Aktor-Plattform (200), ausgelegt für eine akustische Kommunikations- und Speisungsanordnung (100) gemäß einem der Ansprüche 1 bis 5.

8. Verfahren zur akustischen Speisung und Kommunikation, umfassend die folgenden Schritte:
Umwandeln elektrischer Energie in Schallenergie durch einen Wandler (104);
Übermitteln der Schallenergie in einen Schallleiter (102) durch den Wandler (104);
Empfangen der Schallenergie aus dem Schallleiter (102) durch eine Sensor/Aktor-Plattform (200); und
Umwandeln der Schallenergie in elektrische Energie zum Versorgen der elektrischen Verbraucherschaltungen (202, 206) der Sensor/Aktor-Plattform (200);
Umwandeln von elektrischen Signalen aus dem Sensor und/oder Aktor in Schallwellensignale durch einen Elektrosignale-zu-Schallwellen-Umrichter (208, 506) der Sensor/Aktor-Plattform (200);
Übertragen der Schallwellensignale durch die Sensor/Aktor-Plattform (200) über den Schallleiter (102) an den Wandler;
Empfangen der Schallsignale aus dem Schallleiter (102) durch den Wandler (104); und
Umwandeln der Schallsignale in elektrische Signale durch den Wandler (104); wobei
ein Frequenzspektrum der Wellen, die die Schallwellenenergie transportieren, niedriger als ein Frequenzspektrum der Wellen für die Schallwellensignale ist, wobei die Schallwellenenergie Ultraschallenergie ist.

## Revendications

1. Ensemble d'alimentation et de communication acoustique (100), comprenant :
un transducteur (104), configuré pour convertir de l'énergie électrique en énergie d'ondes acoustiques ;
un conducteur d'ondes acoustiques (102) ;
une plateforme de capteur/d'actionneur (200), comprenant un capteur et/ou un actionneur (202), des circuits de plateforme de capteur/d'actionneur (206), et un convertisseur d'énergie d'ondes acoustiques (208, 504), configuré pour convertir de l'énergie d'ondes acoustiques en énergie électrique et pour fournir de l'énergie électrique au capteur et/ou à l'actionneur (202) et aux circuits de plateforme de capteur/d'actionneur (206) ;
dans lequel
le transducteur (104) et la plateforme de capteur/d'actionneur (200) sont connectés acoustiquement par le conducteur d'ondes acoustiques (102) ; dans lequel
la plateforme de capteur/d'actionneur (200) comprend en outre un convertisseur de signal d'ondes acoustiques en signal acoustique (208, 506), configuré pour convertir des signaux électriques provenant du capteur et/ou de l'actionneur en signaux d'ondes acoustiques ; dans lequel
un spectre de fréquences des ondes transportant l'énergie d'ondes acoustiques est plus bas qu'un spectre de fréquences des ondes pour les signaux d'ondes acoustiques, l'énergie d'ondes acoustiques est une énergie ultrasonore.

2. Ensemble d'alimentation et de communication acoustique (100) selon la revendication 1, dans lequel les signaux électriques comprennent des données de mesure, les circuits de plateforme de capteur/d'actionneur (206) étant configurés pour collecter des mesures provenant du capteur et/ou de l'actionneur, pour générer des données de mesure à partir des mesures, et pour fournir les données de mesure en tant que signal électrique au convertisseur de signal électrique en signal d'ondes acoustiques (208) .

3. Ensemble d'alimentation et de communication acoustique (100) selon l'une quelconque des revendications précédentes, dans lequel la direction de propagation du signal électrique diffère de la direction de propagation de ses réflexions au niveau des surfaces du conducteur d'ondes acoustiques (102) ; et
dans lequel le transducteur (104) est agencé dans la direction de rayonnement principale du convertisseur de signal électrique en signal d'ondes acoustiques (208).

4. Ensemble d'alimentation et de communication acoustique (100) selon l'une des revendications précédentes, dans lequel le convertisseur de signal d'ondes acoustiques en signal électrique (208) et le convertisseur d'énergie d'ondes acoustiques (208) de la plateforme de capteur (200) sont basés sur un élément piézoélectrique.

5. Ensemble d'alimentation et de communication acoustique (100) selon l'une des revendications précédentes, dans lequel le conducteur acoustique (102) est une paroi de récipient.

6. Transducteur (104), configuré pour un ensemble d'alimentation et de communication acoustique (100) selon l'une des revendications 1 à 5.

7. Plateforme de capteur/d'actionneur (200), configurée pour un ensemble d'alimentation et de communication acoustique (100) selon l'une des revendications 1 à 5.

8. Procédé d'alimentation et de communication acoustique, comprenant les étapes de :
conversion, par un transducteur (104), d'énergie électrique en énergie acoustique ;
transduction, par le transducteur (104), de l'énergie acoustique dans un conducteur acoustique (102) ;
réception, par une plateforme de capteur/d'actionneur (200), de l'énergie acoustique provenant du conducteur acoustique (102) ; et
conversion de l'énergie acoustique en énergie électrique pour alimenter les circuits de charge électrique (202, 206) de la plateforme de capteur/d'actionneur (200) ;
conversion, par un convertisseur de signal d'ondes acoustiques en signal acoustique (208, 506) de la plateforme de capteur/d'actionneur (200), des signaux électriques provenant du capteur et/ou de l'actionneur en signaux d'ondes acoustiques ;
transmission, par la plateforme de capteur/d'actionneur (200), des signaux d'onde acoustique au transducteur par l'intermédiaire du conducteur acoustique (102) ;
réception, par le transducteur (104), de l'énergie acoustique dans un conducteur acoustique (102) ; et
conversion, par le transducteur (104), des signaux acoustiques en signaux électriques ; dans lequel un spectre de fréquences des ondes transportant l'énergie d'ondes acoustiques est plus bas qu'un spectre de fréquences des ondes pour les signaux d'ondes acoustiques, l'énergie d'ondes acoustiques est une énergie ultrasonore.
